# EUROPEAN PATENT SPECIFICATION

(11) **EP 4 074 175 B1**
(45) Date of publication and mention of the grant of the patent: **15.10.2025**
(21) Application number: 19955534.3
(22) Date of filing: 12.12.2019
(51) Int. Cl.: A01K 63/04, A01K 63/00

(54) **SYSTEM AND NON-INVASIVE SELF-CLEANING METHOD ALLOWING CONTINUOUS REMOVAL OF SOLID WASTE IN FARMING PONDS FOR AQUACULTURE**
SYSTEM UND NICHT-INVASIVES SELBSTREINIGUNGSVERFAHREN, DAS DIE KONTINUIERLICHE ENTFERNUNG FESTER ABFÄLLE IN ZUCHTTEICHEN FÜR AQUAKULTUREN ERMÖGLICHT
SYSTÈME ET PROCÉDÉ NON INVASIF DE NETTOYAGE AUTOMATIQUE QUI PERMET L'EXTRACTION CONTINUE DE RÉSIDUS SOLIDES DANS DES BASSINS D'ÉLEVAGE AQUACOLE

(43) Date of publication of application: 19.10.2022
(73) Proprietor: Universidad Católica de la Santísima Concepción, Concepción 4090541 (CL)
(72) Inventor: VENEGAS CABELLO, Pablo Arturo, 2850 Concepción (CL); LLANCALEO SÁNCHEZ, Katherine Alejandra, San Pedro de la Paz (CL)
(74) Representative: Clarke, Modet y Cía., S.L.
(86) International application number: PCT/IB2019/060712
(87) International publication number: WO 2021/116737

(56) References cited:
- CN-A- 106 962 258
- CN-A- 107 996 488
- CN-U- 202 035 386
- CN-U- 204 047 624
- KR-B1- 101 566 390
- US-A- 1 528 179
- US-A- 3 884 186
- US-A- 6 093 320
- US-A1- 2011 174 232
- US-B1- 6 497 819

## Description

### FIELD OF INVENTION

The present invention relates to the aquaculture industry. In particular, the present invention relates to a system and a method that allows the continuous removal of solid waste that accumulates in ponds used in confined aquaculture, optimizing the fluid-dynamic conditions that ensure the formation of the self-cleaning effect in the pond with low energy consumption. The system and method allow the removal of solid waste, even when the conditions of water rotation velocity and/or the aspect ratio between the diameter of the pond and the height of the water, do not allow the fluid-dynamic conditions to ensure conventional self-cleaning. This technology allows the removal of solid waste and particles without generating circular velocity values in the water that negatively affect the normal development of the culture species, as well as, without the need to structurally modify existing ponds.

### STATE OF THE ART

One of the main problems presented by culture ponds used in aquaculture for the maintenance of the culture species is the accumulation of solid waste and particles inside, from suspended and sedimental solids that are mixed in the water or that are generated during the cultivation process, as uneaten food, and feces among others. The natural oxidation process of these accumulated waste causes a decrease in the dissolved oxygen available in the water of the ponds, as well as causes an increase in harmful and / or toxic compounds for the culture species, such as nitrogenous ammonia and carbon dioxide, among others. These variations in water quality conditions can be harmful to the development of the cultivation, causing a health risk for the cultivation and an increase in the environmental impact when disposing of effluents from the cultivation process.

At present, to achieve adequate levels of removal and withdrawal of solids that accumulate in circular ponds, it is necessary to ensure fluid-dynamic conditions that allow generating a conventional self-cleaning effect. In practice, this conventional self-cleaning effect is achieved by generating circular and radial flow patterns in the water of the ponds, using for this the control and variation of the direction and rotational velocity of the water bodies within the ponds.

The first flow pattern is the so-called primary flow, which corresponds to the rotational flow of the water around the center of the pond. When the speed of the water in the primary flow is high enough, as much as 15 cm/s or more, a secondary flow is created that corresponds to a radial flow towards the center of the vortex of the primary flow, which is characterized by displacing the solid bodies towards the center, generating a conventional self-cleaning effect. However, for self-cleaning to effectively occur, the particles that are dragged by the secondary flow must reach a drain, mainly central and then exit through it, which is ultimately defined by the aspect ratio of the culture pond.

The state of the art reveals that for self-cleaning to actually occur, the aspect ratio of the culture pond (D/h), which corresponds to the ratio of the inner diameter of the pond (D) and the useful water height (h), should be maintained between 1:4 to 1:3. In culture ponds where the aspect ratio is less than 1:3, fluid-dynamic conditions are achieved that allow generating a conventional self-cleaning effect, however, the formed secondary flow fails to move the solid waste to the center of the vortex of the primary flow, so the solid waste are dragged but accumulated inside the pond, forming concentric rings between the pond wall and the central drain.

On the other hand, there is an interrelation between speed of the water and swimming activity of culture species. When the speed of the water is greater than the optimal speed for the swimming activity of the species, swimming becomes unsustainable and stressful, influencing in the health of the species, in their muscle tone, in their breathing and even in the distribution of the species within the pond. Thus, flow rates within culture ponds are limited to safe and healthy speeds for the culture specie and the stage of development in which it is located. This limitation is evident in juvenile fish (fry) wherein the speed of the water to remove and clean solids is strongly restricted to the swimming capacity of the stage of development of the culture species, so that many times the limitation of the flow rate to ensure safe and healthy speeds for the culture species, prevents generating the fluid-dynamic conditions that allow to generate a conventional self-cleaning effect.

Within what is known in the state of the art, there is the application WO 1988/009615 A1, which discloses a device for aquaculture that reduces water consumption, the discharge of contaminated water and the energy necessary for heating comprising a unit for fish farming, which includes a pond or a closed cage that receives water through a water supply pipe or a pump. A filter element is located in the center and immersed in the volume of water inside a vertical chamber. The lower surface of the filter element is fed with air that rises and transports the water through the filter, which is preferably of a biological type, wherein the biological type filter can act as a culture surface for a microorganism's culture that decompose the organic matter and ammonia in the water, wherein also describes the regulation of the speed of the water in the tank at an optimal value for a specific type and size of fish. However, the technology described in this document does not allow the self-cleaning of the pond, but requires a filtration system inside the culture pond, and also does not allow to generate a conventional self-cleaning effect in culture ponds with aspect ratios (D/h) less than 1:3, as well as not allowing to generate a conventional self-cleaning effect when the flow rates to ensure safe and healthy speeds are lower than those required to generate the fluid-dynamic conditions that allow to generate a conventional self-cleaning effect, so that the teachings of the application WO 1988/009615 A1 do not allow to solve the technical problems mentioned above.

As noted above, a system and a method is required that allows the continuous and effective removal of solid waste that accumulates in culture ponds used in aquaculture, avoiding the deterioration of water quality and its negative effect on culture species, even when the fluid-dynamic conditions that ensure the formation of the conventional self-cleaning effect in ponds are not possible to achieve, as a result of the required water flow rate negatively affects the species in culture or that the aspect ratio of the pond (D / h) is not adequate.
Document CN106962258A shows a culture pond capable of automatically clearing away rubbish. The culture pond comprises a culture region and a sludge clearing region the culture region. A partition net is arranged between the culture region and the sludge clearing region, and a telescopic partition plate is arranged below the partition net, being connected with a motor.
Document CN107996488A discloses a periodical water exchange oxygenation aquaculture tank with a water storage tank and a culture tank. A horizontal net partition plate is arranged on the inner lower portion of the culture tank in a matched manner, a vertical net partition plate is arranged on the upper left side of the horizontal net partition plate, and an oxygenation device is arranged on the right side of the culture tank.

Finally, in practical terms it is required that current technology avoids the need to make major physical modifications to culture ponds, as they adversely affect the operational and economic effectiveness of the proposed improvements.

### DESCRIPTION OF THE INVENTION

To correct the technical problem raised, a system according to claims 1 and 9 and a self-cleaning method according to claim 13 are presented that allow the continuous removal of solid waste in culture ponds through the generation of a vortex for the concentration and suction of waste through the rotating movement of the water bodies with different rotational velocities.

The present system and a method is used in aquaculture without the need to modify existing ponds, and allows self-cleaning in culture ponds even when the aspect ratio (D/h) between inner pond diameter (D) and useful water height (h) is less than that required to achieve fluid-dynamic conditions that allow to generate a conventional self-cleaning effect, and that allows self-cleaning in the culture ponds even when the speed of the water required for the safe and healthy cultivation of the culture species is less than the speed required to reach the fluid-dynamic conditions that allow to generate a conventional self-cleaning effect.

### DESCRIPTION OF THE FIGURES

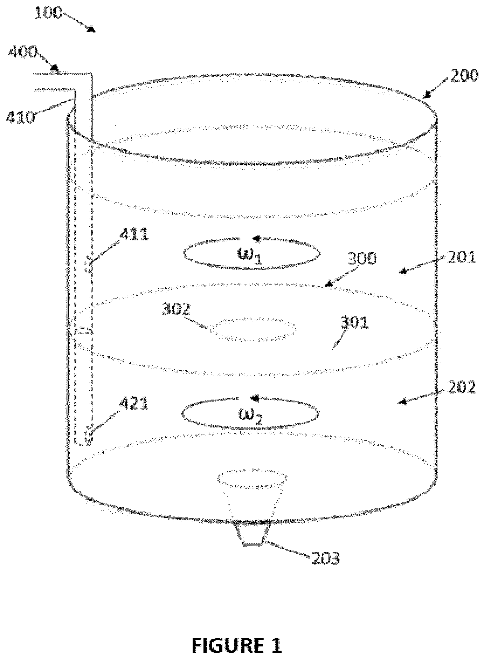

FIG. 1 shows a schematic view of the cleaning system installed in a circular pond, according to an exemplary embodiment.

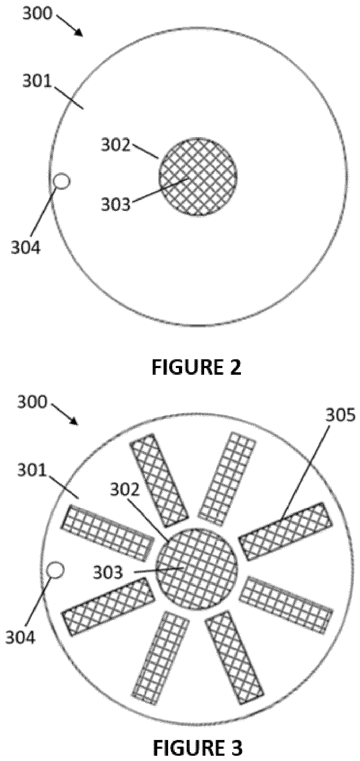

FIG. 2 shows a schematic view in plan of a separator with a central opening and an exterior opening, according to an exemplary embodiment.
FIG. 3 shows a schematic view in plan of a separator such as the one in FIG. 2 that has rectangular radial openings, according to an exemplary embodiment.
FIG. 4 shows a schematic view in plan of a separator like that of FIG. 2 that has radial openings with variable section, according to an exemplary embodiment.
FIG. 5 shows a schematic view in plan of a separator such as the one in FIG. 2 that has radial openings in the form of concentric arches, according to an exemplary embodiment.

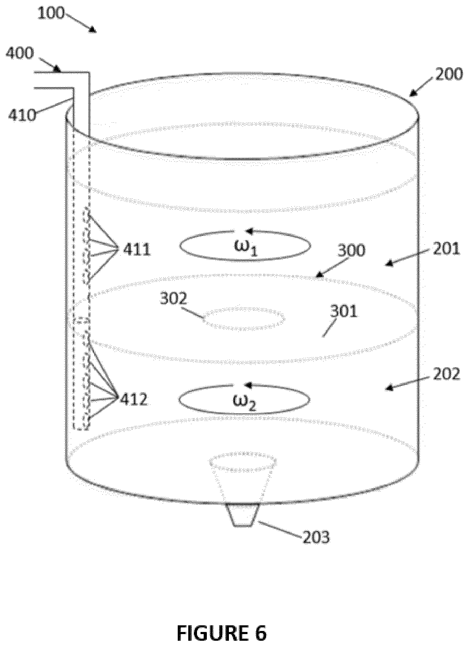

FIG. 6 shows a schematic view of the cleaning system installed in a circular pond like that of FIG. 1 wherein the upper injector and the lower injector have multiple outputs such as a vertical flute-type sprinkler, according to an exemplary embodiment.

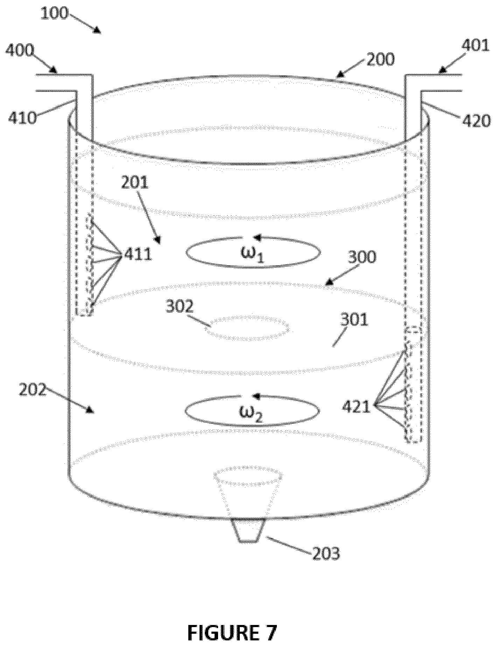

FIG. 7 shows a schematic view of the cleaning system installed in a circular pond like that of FIG. 6 wherein the upper injector and the lower injector are in separate water injection devices , according to an exemplary embodiment.

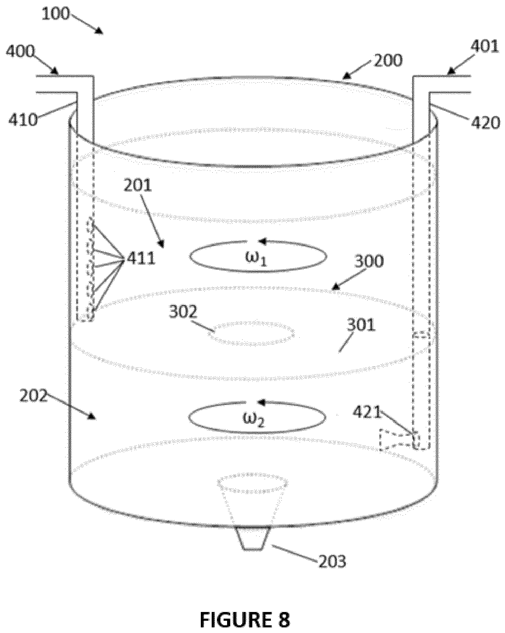

FIG. 8 shows a schematic view of the cleaning system installed in a circular pond like that of FIG. 6 wherein the lower injector has an eductor injector, according to an exemplary embodiment .

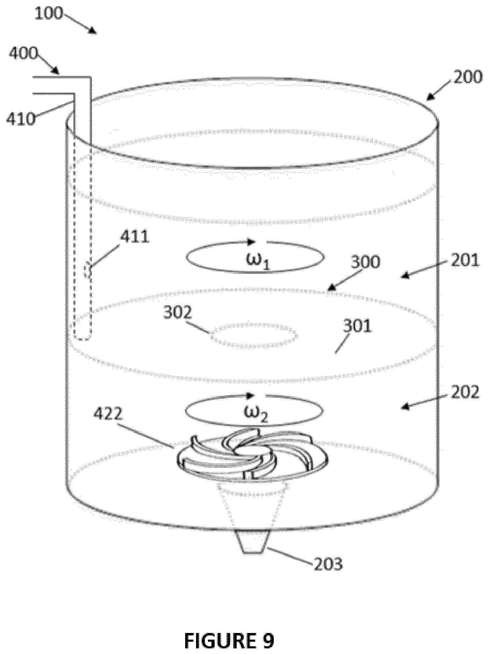

FIG. 9 shows a schematic view of the cleaning system installed in a circular pond similar to that of FIG. 1 wherein the lower injector is replaced by means for driving water located within the lower section of the pond, according to an exemplary embodiment.

### DETAILED DESCRIPTION OF THE INVENTION

The present invention relates to a self-cleaning system that allows the continuous removal of solid waste in culture ponds used in aquaculture. The system comprises a separator of a diameter similar to that of the culture pond, which is installed inside the culture pond to achieve a horizontal separation of it, separating the pond and the body of water into an upper section and a lower section. In the upper section of the pond are located the species that are in the cultivation process, while in the lower section of the pond fluid-dynamic conditions are generated that generate vorticity, suction and self-cleaning of the entire pond, so that in this lower section, solid waste is accumulated and disposed.

The separator comprises a divisor, a central opening, radial openings and an outer opening, wherein the central opening and radial openings have a sieve that prevents the passage of culture species to the lower section, but that allows the transfer of water with solid waste to the lower section, and wherein the outer opening is dimensioned in order to allow the entry of a water injection device, whose dimensions will depend on the hydrodynamic configurations that are to be generated in the water. The separator has means of fixation, which allow to fix and regulate its vertical position in the culture pond of said separator, wherein the means of fixation correspond to a plurality of vertical supports or legs located on the periphery of its lower face that rest at the bottom of the pond, or ropes, chains or other elements that allow hanging said separator from the top of the pond.

In the culture pond is installed a water injection device that injects a first flow of water into the upper section and another device that injects a second flow of water into the lower section. Wherein the first flow of water that is injected into the upper section causes the body of water within the upper section to rotate with a first rotational velocity, generating at least one primary flow within the upper section. The injection device allows to regulate the flow of water inlet in the upper section, allowing the flow rate to be adequate for the development of the culture species. On the other hand, the second flow of water that is injected into the lower section causes the body of water within the lower section to rotate with a second rotational velocity, generating primary and secondary flows that produce a suction vortex on the entire lower surface of the separation disk, dragging the particles from the upper surface of the disk downwards. The second injection system allows to control the second flow rate to control the vorticity within the lower section.

The speed of the water in the lower section is greater than the speed of the water of the upper section, so that, in the areas of interaction between the sections, such as in the central opening and the radial openings of the separator, a differential pressure is generated that displaces the solid waste from the upper section to the lower section through the phenomenon of lifting and dragging. In this way, the solid waste from the upper section moves through the water flows within the upper section, and is quickly dragged to the areas of interaction between the sections, from where they are sucked into the lower section by the differential pressure between the two sections.

Once transferred to the lower section, solid waste is transported by the primary and secondary vorticity flows from the lower section to a central drain connected to a drainage pipe, and is transported out of the culture pond to conventional cleaning and filtration systems for water treatment. In this way, the present self-cleaning system allows a rapid and continuous elimination of solid waste generated by the culture species and their feeding and that accumulate in the culture ponds, maintaining a safe speed for the culture species in the upper section, with the benefits of self-cleaning of the culture pond, even when the ratio of inner pond diameter to useful water height (D/h) is less than that required for conventional self-cleaning to occur.

In the present invention, the flow rate injected into each section must be regulated so that the second rotational velocity in the lower section is greater than the first rotational velocity in the upper section. In a preferred embodiment of the invention, the second rotational velocity in the lower section is at least twice as much as the first rotational velocity in the upper section. In an even more preferential embodiment of the invention, the second rotational velocity in the lower section is at least three times that of the first rotational velocity in the upper section. In an even more preferred embodiment of the invention, the second rotational velocity in the lower section is at least 3.2 times the first rotational velocity in the upper section.

In some embodiments of the present invention, the water injection system injects water into the upper section and / or in the lower section by means of various water injectors, such as, injectors with a large diameter nozzle , several smaller diameter vertical spray nozzles, individual eductors or a combination thereof. Preferably the lower injection system comprises one or more eductor injectors, which optimize the water mixture and the formation of the self-cleaning phenomenon. The number of eductor injectors used will depend on the hydraulic diameter of the culture pond, the size of the eductor, and the speed and mixing requirements necessary for the operation of the self-cleaning system.

Among the advantages of the present invention is that it is non-invasive or harmful to the culture species, that the waste removal is continuous, that it is not required to modify or replace the existing culture ponds and allows self-cleaning in culture ponds wherein the aspect ratio of the culture pond (D / h) does not allow to reach the fluid-dynamic conditions that allow to generate a conventional self-cleaning effect.

Among other advantages of the present invention has to reduce the volumes of water necessary for production, since the present technology allows to generate a self-cleaning effect even when the aspect ratio is much lower than 1: 3, so it allows to maintain smaller columns of water within the culture ponds, reducing the volume of water required to achieve self-cleaning in the culture ponds. This implies that the associated water treatment and conditioning systems can be smaller in size and of lower capacity, while requiring less physical space, and less energy to operate. By decreasing the volume of water necessary for production, the energy consumption associated with the movement of water within the culture pond is reduced. **In** addition, the rapid removal of solid waste prevents culture species from being exposed for a long time to the exposure of sub-lethal levels of any of the variables of water quality, improving their life quality, level of stress and development, which translates into improvements in productivity due to adequate health conditions for the culture species.

In some embodiments of this technology, the separator comprising a plurality of detachable and replaceable subsections that make up said separator. Additionally, in some embodiments of the invention, the sieve of the central opening and radial openings is mounted in a removable way, so that the sieve used at each moment of the cultivation process is changed and adjusted according to the sizes required to avoid the passage of growing culture species from the upper section to the lower section, and in turn allow the passage of solid waste from the upper section to the lower section.

In some embodiments of the present technology, the sieve of the central opening and radial openings has a mesh opening less than 15% of the average size of the culture specie, most preferably less than 10% of the average size of the culture specie, in order to avoid damage or stress on the culture species product of the suction that is generated around the separator. Wherein the sieve is made of metals such as steel, aluminum and copper alloys, polymeric materials or a combination of them, such as metal meshes coated with polymers.

In some embodiments of the present technology, the means of fixation correspond to a plurality of vertical supports or legs that have a graduation with equispaced marks or graduation in centimeters to facilitate vertical adjustment and horizontality of its surface, wherein the means of fixation correspond to at least three vertical supports or legs located in the peripheral area of the separator and at least three vertical supports or legs located in the central area.

In some embodiments of this technology, the separator is located at a height of at least 10% of the height of the water inside the pond, most preferably at a height of at least 15% of the height of the water inside the pond to ensure better operation of the solids removal system.

In some embodiments of the invention, radial openings have geometry of concentric arcs of substantially constant section. In other embodiments of the present technology, radial openings have rectangular shape. In other embodiments of the present technology, the radial openings are made up of a plurality of suction intake in the form of a shallow ramp with curved walls, similar to the NACA ducts, in order to reduce the disturbance in the flow caused by suction in the areas of the grids.

In some embodiments of the invention, the lower injector is replaced by means for driving water located within the lower section, which are actuated by means of a motor to confer movement to the body of water within the lower section to reach and maintain the second rotational velocity. Where such means of driving water can be propellers, turbines, rotating vanes, blades, or other suitable mechanical elements.

In some embodiments of the present technology, the bottom of the pond is conical towards a drain in the central area of the bottom of the culture pond, with a slope of less than 15%, more preferably less than 10% to ensure better operation of the solids removal system.

In a preferential embodiment of the present invention, there is a non-invasive self-cleaning system (100) that allows the continuous removal of solid waste in culture ponds (200) of aquaculture, comprising: at least one drain (203) in the central area of the lower part of the culture pond (200); a separator (300) separating the interior from the pond (200) in an upper section (201) and a lower section (202), wherein the separator (300) comprises a divisor (301), a central opening (302) with sieve (303), an outer opening (304) and a plurality of radial or concentric openings (305) with sieve (303); at least one water injection device (400, 401), comprising at least one pipe (410, 420), at least one top injector (411) and at least one bottom injector (421); where said at least one upper injector (411) injects a first flow (Q1) of water into the upper section (201) of the pond (200) that generates a first rotational velocity (ω1) into the body of water of the upper section (201); where said at least one lower injector (421) injects a second flow (Q2) of water into the lower section (202) of the pond (200) generating a second rotational velocity (ω2) in the body of water of the lower section (202); where the second rotational velocity (ω2) of the body of water of the lower section (202) is greater than the first rotational velocity (ω1) of the body of water of the upper section (201).

In another preferred embodiment of the present invention, the second rotational velocity (ω2) is at least three times the first rotational velocity (ω1) of the body of water of the upper section (S1).

In another preferred embodiment of the present invention, the separator (300) is formed from multiple detachable subsections of separator.

In another preferred embodiment of the present invention, the sieve (303) is removable and replaceable, so that it allows to replace the sieve according to the size and stage of development of the culture species.

In another preferred embodiment of the present invention, at least one lower injector (421) are eductor injectors.

In another preferred embodiment of the present invention, the first rotational velocity (ω1) and the second rotational velocity (ω2) have the same natural direction of the Coriolis force.

In another preferred embodiment of the present invention, said at least one upper injector (411) and at least one lower injector (421) have the discharge positioned at an angle between 25° and 70° with respect to the tangent line of the wall of the culture pond.

In another preferred embodiment of the present invention, the upper section (201) is subdivided into at least two subsections (201a, 201b), where each subsection has a rotational velocity lower than that of the subsection directly below.

In another preferred embodiment of the present invention, a non-invasive self-cleaning system (100) is presented that allows the continuous removal of solid waste in culture ponds (200) for aquaculture, comprising: at least one drain (203) in the central area of the lower part of the culture pond (200) ; a separator (300) separating the interior of the pond (200) into an upper section (201) and a lower section (202), wherein the separator (300) comprises a divisor (301), a central opening (302) with sieve (303) and a plurality of radial or concentric openings (305) with sieve (303); at least one water injection device (400, 401), comprising at least one pipe (410, 420) and at least one top injector (411); and means for driving water (422) located within the lower section (202); where said at least one upper injector (411) injects a first flow (Q1) of water into the upper section (201) of the pond (200) which generates a first rotational velocity (ω1) into the body of water of the upper section (201); where the means for driving water (422) drive the body of water in the lower section (202) of the pond (200) and generate a second rotational velocity (ω2) in the body of water of the lower section (202); where the second rotational velocity (ω2) of the body of water of the lower section (202) is greater than the first rotational velocity (ω1) of the body of water of the upper section (201).

In another preferred embodiment of the present invention, the means for driving water (422) are propellers, turbines, rotary vanes, blades or other suitable mechanical elements.

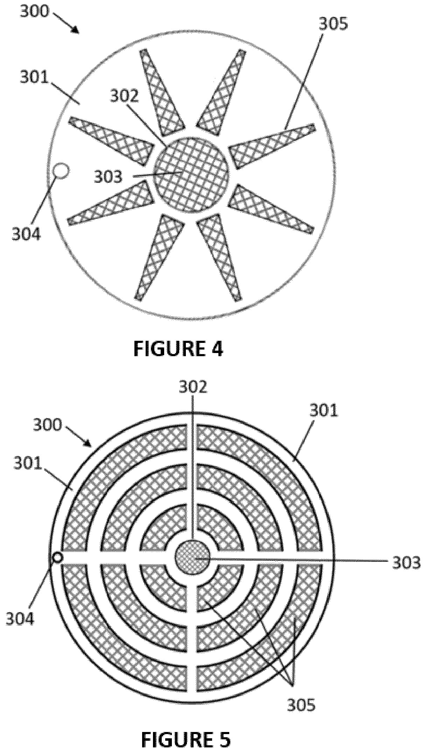

In another preferred embodiment of the present invention, a non-invasive self-cleaning method is presented that allows the continuous removal of solid waste in culture ponds (200) for aquaculture, comprising the stages of: injecting a first flow (Q1) of water into an upper section (201) of the pond (200); inject a second flow rate (Q2) of water in a lower section (202) of the pond (200); generate a first rotational velocity (ω1) in a first body of water from an upper section (201) of the culture pond (200); generate a second rotational velocity (ω2) in a second body of water from a lower section (202) of the culture pond (200); displace solid waste from the upper section (201) to the lower section (202) by means of a differential pressure; and extract a flow of water from the culture pond (200) through a drain (203); wherein the second rotational velocity (ω2) of the body of water of the lower section (202) is greater than the first rotational velocity (ω1) of the body of water of the upper section (201).
In another preferred embodiment of the present invention, the method also comprises the step of replacing the sieve according to the size and stage of development of the culture species and as shown in Figure 4, the sieve (303) is equal to the sieve of the plurality of radial or concentric openings (305) or as shown in Figure 5, the sieve (303) is different from the sieve of the plurality of radial or concentric openings (305).

In another preferred embodiment of the present invention, the lower injector (421) is an injection system composed of multiple injectors, where these injectors are eductor injectors.

### APPLICATION EXAMPLES

### EXAMPLE 1.

The cultivation system described was used for the cultivation and production of salmon in their freshwater stage in circular culture ponds with 1.2 meters in diameter, and 0.5 meters deep, where the separator was built in the form of a disc with a diameter similar to the inner diameter of the culture pond, so that the space between the separator and the inner wall of the culture pond was small enough to prevent the passage of salmon from the upper section to the lower section. The separator was built with a central opening of 10 centimeters in diameter and 8 radial openings equispaced with rectangle shape 40 centimeters long and 10 centimeters wide, wherein the central opening and radial openings were covered with a removable stainless steel wire mesh sieve with 2.5 millimeter mesh opening. The disc was introduced into the culture pond and positioned 0.15 meters from the base of the pond by support legs supported at the base of the pond.

For this embodiment, an upper injector was entered in the upper section of the pond and a lower injector in the lower area of the pond through an external opening of the separator, where in the upper injector a water injection system (flute) vertical sprinkler type was used, and in the lower injector a water injection system eductor type was used. Both injection systems were positioned so that the output flow was directed to 45° with respect to the tangent line at the inner edge of the pond.

With the equipment positioned inside the pond, the water and culture species were introduced into the pond, and by means of a water supply pipe or water pumps connected to the upper and lower injectors, in the upper section a flow rate of 7 liters per minute was introduced, and in the lower section a flow rate of 21.2 liters per minute was introduced, so that the rotational velocity in the upper section was 4.6 cm/s and the rotational velocity in the lower section was 14.2 cm/s, where the velocities were measured at the distal end of the diameter. Under these conditions, the solid waste in the upper section was carried by the primary flow in said upper section to the radial openings, where they were sucked into the lower section by the differential pressure generated in these areas. Once in the lower section of the pond, the solid waste was transported by the primary and secondary flows to a drain in the central area of the bottom of the culture pond, and then the water was transported to a conventional filtering system by means of pipes.

As the salmon grew, the amount of food introduced increased and the fish depositions grew in size, so successive sieve changes were made, replacing the steel mesh with meshes with a larger opening so that lager solid waste were able to pass through the separator, but without allowing the salmon to pass into the lower section of the culture pond.

### EXAMPLE 2

This example determined the effect of the separator during sea urchin (*Loxechinus albus,* sea *urchin*) maintenance. For this purpose, the same 1.2 m diameter pond and the same separator were used, to which only the removable sieve was changed to one with a 0.5 cm mesh opening. In the pond the separator was installed, seawater was added, and then 30 sea urchins of 4 cm in diameter were placed. To facilitate the comparison, the same flow rate inlet was used in the upper and lower section of the pond, generating rotational velocities in the upper section of 4.3 cm/s and the rotational velocity in the lower section was 14.5 cm/s, where the velocities were measured at the distal end of the diameter. The sea urchins were fed every 3 days with pieces of green seaweed (*Ulva spp*) and brown seaweed (*Lessonia spp*).

Under these operating conditions, was detected, for a period of 40 days, the same phenomenon that occurred with the salmon of example 1, the solid waste in the upper section (pieces of algae and feces) were dragged by the primary flow in said upper section towards the radial openings, wherein they were sucked into the lower section by the differential pressure generated in these areas. Once in the lower section of the pond, solid waste was transported by the primary and secondary flows to a drain in the central area of the bottom of the culture pond, to then transport the water to a conventional filtering system through pipes.

The results of example 2 should be considered relevant for the application of this new technology in the cultivation and production of fish, mollusks and crustaceans that present in their life cycle a stage of benthic development, such as sessile species or hemi-sessiles, or that require the use of devices or elements as artificial shelters for their correct cultivation. These culture requirements adversely affect the formation of the second flow pattern in the culture ponds, limiting the benefits generated by the self-cleaning effect. In this group of species are mainly found flatfish such as Turbot (*Scophthalmus maximus*), Hirame (*Paralichthys olivaceus*), Halibut (*Hippoglossus hippoglossus*), Atlantic cod (*Gadus morhua*), echinoderms such as sea urchin, crustaceans such as shrimp, lobsters, and mollusks such as abalones, octopus, among others.

Finally, in order to facilitate the reading and understanding of the present invention, a list with the reference numbers of the mentioned components is incorporated below:
- 100: cleaning system
- 200: pond
- 201: upper section
- 202: lower section
- 203: drain
- 300: separator
- 301: divisor
- 302: central opening
- 303: sieve
- 304: outer opening
- 305: radial openings
- 400: injection device
- 401: injection device
- 410: pipe
- 411: upper injector
- 420: pipe
- 421: lower injector
- 422: means for driving water
- ω₁: first rotational velocity
- ω₂: second rotational velocity
- Q₁: first flow
- Q₂: second flow

## Claims

1. A non-invasive self-cleaning system (100) for a culture pond (200) for aquaculture, configured to allow a continuous removal of solid waste in said culture pond (200), **characterized in that** it comprises:
at least one drain (203) configured to be placed in the central area of the bottom of the culture pond (200);
a separator (300) configured to separate the inside of the pond (200) into an upper section (201) and a lower section (202), where the separator (300) comprises a divisor (301), a central opening (302) with a sieve (303), an outer opening (304) and a plurality of radial or concentric openings (305) with the sieve (303);
at least one water injection device (400, 401), comprising at least one pipe (410, 420), at least one upper injector (411) and at least one lower injector (421);
the outer opening (304) dimensioned to allow entry of the water injection device (400, 401),
wherein said at least one upper injector (411) is configured to inject a first flow (Q1) of water in the upper section (201) of the pond (200) generating a first rotational velocity (w1) into the body of water of the upper section (201);
wherein said at least one lower injector (421) is configured to inject a second flow (Q2) of water into the lower section (202) of the pond (200) generating a second rotational velocity (w2) into the body of water of the lower section (202);
being the first flow (Q1) injected by the upper injector (411) and the second flow (Q2) injected by the lower injector (421) such that the second rotational velocity (w2) generated in the lower section (202) is greater than the first rotational velocity (w1) generated in the upper section (201).

2. The system according to claim 1, **characterized in that** the second rotational velocity (w2) is at least three times the first rotational velocity (ω1) of the body of water of the upper section (S1).

3. The system according to claim 1, **characterized in that** the separator (300) is formed from multiple detachable separator subsections.

4. The system according to claim 1, **characterized in that** the sieve (305) is removable and replaceable, so that it allows the sieve to be replaced according to the size and stage of development of the culture species.

5. The system according to claim 1, **characterized in that** the at least one lower injector (421) are eductor injectors.

6. The system according to claim 1, **characterized in that** the upper injector (411) and the lower injector (421) are configured to inject the first flow (Q1) of water and the second flow (Q2) of water providing the first rotational velocity (ω1) and the second rotational velocity (w2) with the same natural direction as the Coriolis force.

7. The system according to claim 1, **characterized in that** said at least one upper injector (411) and at least one lower injector (421) are configured to inject the first flow (Q1) and the second flow (Q2) with an angle between 25° and 70° with respect to the tangent line of the wall of the culture pond.

8. The system according to claim 1, **characterized in that** the upper section (201) is subdivided into at least two subsections (201a, 201b), wherein each subsection has a lower rotational velocity than the subsection directly below.

9. A non-invasive self-cleaning system (100) for a culture pond (200) for aquaculture, configured to allow a continuous removal of solid waste in said culture pond (200), **characterized in that** it comprises:
at least one drain (203) configured to be placed in the central area of the bottom of the culture pond (200);
a separator (300) configured to separate the inside of the pond (200) into an upper section (201) and a lower section (202), wherein the separator (300) comprises a divider (301), a central opening (302) with a sieve (303), an outer opening (304) and a plurality of radial or concentric openings (305) with the sieve (303); at least one water injection device (400, 401), comprising at least one pipe (410, 420) and at least one upper injector (411);
the outer opening (304) dimensioned to allow entry of the water injection device (400, 401),
means for driving water (422) configured to be placed within the lower section (202);
wherein said at least one upper injector (411) is configured to inject a first flow (Q1) of water in the upper section (201) of the pond (200) generating a first rotational velocity (w1) in the body of water of the upper section (201);
wherein the means for driving water (422) are configured to drive the body of water in the lower section (202) of the pond (200) generating a second rotational velocity (w2) in the body of water of the lower section (202); and
being the first flow (Q1) injected by the upper injector (411) and the means for driving water (422) such that the second rotational velocity (w2) generated in the lower section (202) is greater than the first rotational velocity (w1) generated in the upper section (201).

10. The system according to claim 9, **characterized in that** the second rotational velocity (w2) is at least three times the first rotational velocity (ω1) of the body of water of the upper section (201).

11. The system according to claim 9, **characterized in that** the means for driving water (422) are propellers, turbines, rotating vanes, blades or other suitable mechanical elements.

12. The system according to claim 9, **characterized in that** the upper injector (411) and the means for driving water (422) are configured to inject the first flow (Q1) of water and to drive water providing the first rotational velocity (w1) and the second rotational velocity (w2) with the same natural direction as the Coriolis force.

13. A non-invasive self-cleaning method of a culture pond (200) for aquaculture, using a non-invasive self-cleaning system according to any of claims 1 and 9, **characterized in that** it includes the steps of:
injecting a first flow (Q1) of water into an upper section (201) of the pond (200);
injecting a second flow (Q2) of water into a lower section (202) of the pond (200);
generating a first rotational velocity (w1) in a first body of water of an upper section (201) of the culture pond (200);
generating a second rotational velocity (w2) in a second body of water from a lower section (202) of the culture pond (200);
moving solid waste from the upper section (201) to the lower section (202) by means of a pressure difference; and
extracting a flow of water from the culture pond (200) through a drain (203);
wherein the second rotational velocity (w2) of the body of water of the lower section (202) is greater than the first rotational velocity (w1) of the body of water of the upper section (201).

14. The method according to claim 13, **characterized in that** the second rotational velocity (ω2) is at least three times the first rotational velocity (ω1) of the body of water of the upper section (S1).

15. The method according to claim 13, **characterized in that** it also includes the step of replacing the sieve (303) according to the size and stage of development of the culture species.

## Patentansprüche

1. Nicht-invasives Selbstreinigungssystem (100) für einen Zuchtteich (200) in der Aquakultur, das zur kontinuierlichen Entfernung von festen Abfällen in dem genannten Zuchtteich (200) ausgebildet ist, **dadurch gekennzeichnet, dass** es Folgendes umfasst:
mindestens einen Abfluss (203), der zur Anordnung im mittleren Bodenbereich des Zuchtteichs (200) ausgebildet ist;
eine Trennvorrichtung (300), die zur Unterteilung des Innenraums des Teichs (200) in einen oberen Teil (201) und einen unteren Teil (202) ausgebildet ist, wobei die Trennvorrichtung (300) ein Trennelement (301), eine mittige Öffnung (302) mit einem Sieb (303), eine äußere Öffnung (304) und eine Vielzahl von mit dem Sieb (303) versehenen radialen oder konzentrischen Öffnungen (305) umfasst;
mindestens eine Wassereinspritzvorrichtung (400, 401), die mindestens ein Rohr (410, 420), mindestens einen oberen Injektor (411) und mindestens einen unteren Injektor (421) umfasst;
wobei die äußere Öffnung (304) so dimensioniert ist, dass der Eintritt der Wassereinspritzvorrichtung (400, 401) ermöglicht wird,
wobei der genannte mindestens eine obere Injektor (411) so ausgebildet ist, dass er einen ersten Wasserfluss (Q1) in den oberen Teil (201) des Teichs (200) einspritzt und so eine erste Rotationsgeschwindigkeit (ω1) in der Wassermasse des oberen Teils (201) erzeugt;
wobei der genannte mindestens eine untere Injektor (421) so ausgebildet ist, dass er einen zweiten Wasserfluss (Q2) in den unteren Teil (202) des Teichs (200) einspritzt und so eine zweite Rotationsgeschwindigkeit (ω2) in der Wassermasse des unteren Teils (202) erzeugt;
wobei der erste Fluss (Q1) durch den oberen Injektor (411) und der zweite Fluss (Q2) durch den unteren Injektor (421) eingespritzt wird, sodass die im unteren Teil (202) erzeugte zweite Rotationsgeschwindigkeit (w2) größer als die im oberen Teil (201) erzeugte erste Rotationsgeschwindigkeit (ω1) ist.

2. System nach Anspruch 1, **dadurch gekennzeichnet, dass** die zweite Rotationsgeschwindigkeit (w2) mindestens dreimal so groß wie die erste Rotationsgeschwindigkeit (ω1) in der Wassermasse des oberen Teils (S1) ist.

3. System nach Anspruch 1, **dadurch gekennzeichnet, dass** die Trennvorrichtung (300) aus mehreren demontierbaren Trennvorrichtungsteilstücken besteht.

4. System nach Anspruch 1, **dadurch gekennzeichnet, dass** das Sieb (305) herausnehmbar und austauschbar ist, sodass es je nach Größe und Entwicklungsstadium der Zuchtart ausgetauscht werden kann.

5. System nach Anspruch 1, **dadurch gekennzeichnet, dass** der mindestens eine untere Injektor (421) als Ejektor ausgebildet ist.

6. System nach Anspruch 1, **dadurch gekennzeichnet, dass** der obere Injektor (411) und der untere Injektor (421) dazu ausgebildet sind, den ersten Wasserfluss (Q1) und den zweiten Wasserfluss (Q2) so einzuspritzen, dass die erste Rotationsgeschwindigkeit (ω1) und die zweite Rotationsgeschwindigkeit (ω2) in derselben natürlichen Richtung wie die Corioliskraft verlaufen.

7. System nach Anspruch 1, **dadurch gekennzeichnet, dass** der genannte mindestens eine obere Injektor (411) und der genannte mindestens eine untere Injektor (421) dazu ausgebildet sind, den ersten Wasserfluss (Q1) und den zweiten Wasserfluss (Q2) in einem Winkel zwischen 25° und 70° relativ zur Tangente der Zuchtteichwand einzuspritzen.

8. System nach Anspruch 1, **dadurch gekennzeichnet, dass** der obere Teil (201) in mindestens zwei Teilabschnitte (201a, 201b) unterteilt ist, wobei jeder Teilabschnitt eine geringere Rotationsgeschwindigkeit als der unmittelbar darunter liegende Teilabschnitt aufweist.

9. Nicht-invasives Selbstreinigungssystem (100) für einen Zuchtteich (200) in der Aquakultur, das zur kontinuierlichen Entfernung von festen Abfällen in dem genannten Zuchtteich (200) ausgebildet ist, **dadurch gekennzeichnet, dass** es Folgendes umfasst:
mindestens einen Abfluss (203), der zur Anordnung im mittleren Bodenbereich des Zuchtteichs (200) ausgebildet ist;
eine Trennvorrichtung (300), die zur Unterteilung des Innenraums des Teichs (200) in einen oberen Teil (201) und einen unteren Teil (202) ausgebildet ist, wobei die Trennvorrichtung (300) ein Trennelement (301), eine mittige Öffnung (302) mit einem Sieb (303), eine äußere Öffnung (304) und eine Vielzahl von mit dem Sieb (303) versehenen radialen oder konzentrischen Öffnungen (305) umfasst;
mindestens eine Wassereinspritzvorrichtung (400, 401), die mindestens ein Rohr (410, 420) und mindestens einen oberen Injektor (411) umfasst;
wobei die äußere Öffnung (304) so dimensioniert ist, dass der Eintritt der Wassereinspritzvorrichtung (400, 401) ermöglicht wird,
Wasserantriebsmittel (422), das zur Anordnung im unteren Teil (202) ausgebildet ist;
wobei der genannte mindestens eine obere Injektor (411) so ausgebildet ist, dass er einen ersten Wasserfluss (Q1) in den oberen Teil (201) des Teichs (200) einspritzt und so eine erste Rotationsgeschwindigkeit (ω1) in der Wassermasse des oberen Teils (201) erzeugt;
wobei das Wasserantriebsmittel (422) so ausgebildet ist, dass es die Wassermasse im unteren Teil (202) des Teiches (200) in Bewegung versetzt und eine zweite Rotationsgeschwindigkeit (w2) in der Wassermasse des unteren Teils (202) erzeugt; und
wobei der erste Fluss (Q1) durch den oberen Injektor (411) und das Wasserantriebsmittel (422) eingespritzt wird, sodass die im unteren Teil (202) erzeugte zweite Rotationsgeschwindigkeit (w2) größer als die im oberen Teil (201) erzeugte erste Rotationsgeschwindigkeit (ω1) ist.

10. System nach Anspruch 9, **dadurch gekennzeichnet, dass** die zweite Rotationsgeschwindigkeit (w2) mindestens dreimal so groß wie die erste Rotationsgeschwindigkeit (ω1) in der Wassermasse des oberen Teils (201) ist.

11. System nach Anspruch 9, **dadurch gekennzeichnet, dass** die Wasserantriebsmittel (422) Propeller, Turbinen, rotierende Flügel, Schaufeln oder andere geeignete mechanische Elemente sind.

12. System nach Anspruch 9, **dadurch gekennzeichnet, dass** der obere Injektor (411) und das Wasserantriebsmittel (422) dazu ausgebildet sind, den ersten Wasserfluss (Q1) so einzuspritzen und Wasser so in Bewegung zu versetzen, dass die erste Rotationsgeschwindigkeit (ω1) und die zweite Rotationsgeschwindigkeit (ω2) in derselben natürlichen Richtung wie die Corioliskraft verlaufen.

13. Nicht-invasives Selbstreinigungsverfahren für einen Zuchtteich (200) in der Aquakultur unter Verwendung eines nicht-invasiven Selbstreinigungssystems nach einem der Ansprüche 1 und 9, **dadurch gekennzeichnet, dass** es folgende Schritte umfasst:
Einspritzen eines ersten Wasserflusses (Q1) in einen oberen Teil (201) des Teichs (200); Einspritzen eines zweiten Wasserflusses (Q2) in einen unteren Teil (202) des Teichs (200);
Erzeugen einer ersten Rotationsgeschwindigkeit (ω1) in einer ersten Wassermasse in einem oberen Teil (201) des Zuchtteichs (200);
Erzeugen einer zweiten Rotationsgeschwindigkeit (ω2) in einer zweiten Wassermasse in einem unteren Teil (202) des Zuchtteichs (200);
Bewegen von festen Abfällen aus dem oberen Teil (201) in den unteren Teil (202) mittels einer Druckdifferenz; und
Ableiten eines Wasserflusses aus dem Zuchtteich (200) durch einen Abfluss (203);
wobei die zweite Rotationsgeschwindigkeit (w2) der Wassermasse im unteren Teil (202) größer als die erste Rotationsgeschwindigkeit (ω1) der Wassermasse im oberen Teil (201) ist.

14. Verfahren nach Anspruch 13, **dadurch gekennzeichnet, dass** die zweite Rotationsgeschwindigkeit (w2) mindestens dreimal so groß wie die erste Rotationsgeschwindigkeit (ω1) der Wassermasse im oberen Teil (S1) ist.

15. Verfahren nach Anspruch 13, **dadurch gekennzeichnet, dass** es auch den Schritt des Austauschens des Siebs (303) je nach Größe und Entwicklungsstadium der Zuchtart umfasst.

## Revendications

1. Système non invasif de nettoyage automatique (100) pour un bassin d'élevage (200) aquacole, configuré pour permettre une extraction continue de résidus solides dans ledit bassin d'élevage (200), **caractérisé en ce qu'**il comprend :
au moins un drain (203) configuré pour être placé dans la zone centrale du fond du bassin d'élevage (200) ;
un séparateur (300) configuré pour séparer l'intérieur du bassin (200) en une section supérieure (201) et une section inférieure (202), où le séparateur (300) comprend un diviseur (301), une ouverture centrale (302) avec un tamis (303), une ouverture extérieure (304) et une pluralité d'ouvertures radiales ou concentriques (305) avec le tamis (303) ;
au moins un dispositif d'injection d'eau (400, 401), comprenant au moins un tuyau (410, 420), au moins un injecteur supérieur (411) et au moins un injecteur inférieur (421) ;
l'ouverture extérieure (304) étant dimensionnée pour permettre l'entrée du dispositif d'injection d'eau (400, 401),
dans lequel ledit au moins un injecteur supérieur (411) est configuré pour injecter un premier écoulement (Q1) d'eau dans la section supérieure (201) du bassin (200) générant une première vitesse de rotation (w1) dans la masse d'eau de la section supérieure (201) ;
dans lequel ledit au moins un injecteur inférieur (421) est configuré pour injecter un deuxième écoulement (Q2) d'eau dans la section inférieure (202) du bassin (200) générant une deuxième vitesse de rotation (w2) dans la masse d'eau de la section inférieure (202) ;
le premier écoulement (Q1) injecté par l'injecteur supérieur (411) et le deuxième écoulement (Q2) injecté par l'injecteur inférieur (421) étant de sorte que la deuxième vitesse de rotation (w2) générée dans la section inférieure (202) est supérieure à la première vitesse de rotation (ω1) générée dans la section supérieure (201).

2. Système selon la revendication 1, **caractérisé en ce que** la deuxième vitesse de rotation (w2) est au moins trois fois supérieure à la première vitesse de rotation (ω1) de la masse d'eau de la section supérieure (S1).

3. Système selon la revendication 1, **caractérisé en ce que** le séparateur (300) est formé à partir d'une pluralité de sous-sections de séparateur détachables.

4. Système selon la revendication 1, **caractérisé en ce que** le tamis (305) est amovible et remplaçable, de sorte qu'il permet le tamis d'être remplacé selon la taille et le stade de développement des espèces cultivées.

5. Système selon la revendication 1, **caractérisé en ce que** l'au moins un injecteur inférieur (421) sont des injecteurs éjecteurs.

6. Système selon la revendication 1, **caractérisé en ce que** l'injecteur supérieur (411) et l'injecteur inférieur (421) sont configurés pour injecter le premier écoulement (Q1) d'eau et le deuxième écoulement (Q2) d'eau produisant la première vitesse de rotation (ω1) et la deuxième vitesse de rotation (w2) avec la même direction naturelle que la force de Coriolis.

7. Système selon la revendication 1, **caractérisé en ce que** ledit au moins un injecteur supérieur (411) et au moins un injecteur inférieur (421) sont configurés pour injecter le premier écoulement (Q1) et le deuxième écoulement (Q2) avec un angle compris entre 25° et 70° par rapport à la ligne tangente de la paroi du bassin d'élevage.

8. Système selon la revendication 1, **caractérisé en ce que** la section supérieure (201) est subdivisée en au moins deux sous-sections (201a, 201b), dans lequel chaque sous-section présente une vitesse de rotation inférieure à la sous-section directement en dessous.

9. Système non invasif de nettoyage automatique (100) pour un bassin d'élevage (200) aquacole, configuré pour permettre une extraction continue de résidus solides dans ledit bassin d'élevage (200), **caractérisé en ce qu'**il comprend :
au moins un drain (203) configuré pour être placé dans la zone centrale du fond du bassin d'élevage (200) ;
un séparateur (300) configuré pour séparer l'intérieur du bassin (200) en une section supérieure (201) et une section inférieure (202), dans lequel le séparateur (300) comprend un diviseur (301), une ouverture centrale (302) avec un tamis (303), une ouverture extérieure (304) et une pluralité de ouvertures radiales ou concentriques (305) avec le tamis (303) ;
au moins un dispositif d'injection d'eau (400, 401), comprenant au moins un tuyau (410, 420) et au moins un injecteur supérieur (411) ;
l'ouverture extérieure (304) étant dimensionnée pour permettre l'entrée du dispositif d'injection d'eau (400, 401),
des moyens pour entraîner l'eau (422) configurés pour être placés à l'intérieur de la section inférieure (202) ;
dans lequel ledit au moins un injecteur supérieur (411) est configuré pour injecter un premier écoulement (Q1) d'eau dans la section supérieure (201) du bassin (200) générant une première vitesse de rotation (w1) dans la masse d'eau de la section supérieure (201) ;
dans lequel les moyens pour entraîner l'eau (422) sont configurés pour entraîner la masse d'eau dans la section inférieure (202) du bassin (200) générant une deuxième vitesse de rotation (w2) dans la masse d'eau de la section inférieure (202) ; et
le premier écoulement (Q1) injecté par l'injecteur supérieur (411) et les moyens pour entraîner l'eau (422) étant de sorte que la deuxième vitesse de rotation (w2) générée dans la section inférieure (202) est supérieure à la première vitesse de rotation (ω1) générée dans la section supérieure (201).

10. Système selon la revendication 9, **caractérisé en ce que** la deuxième vitesse de rotation (w2) est au moins trois fois supérieure à la première vitesse de rotation (ω1) de la masse d'eau de la section supérieure (201).

11. Système selon la revendication 9, **caractérisé en ce que** les moyens pour entraîner l'eau (422) sont des hélices, des turbines, des pales tournantes, des aubes ou d'autres éléments mécaniques appropriés.

12. Système selon la revendication 9, **caractérisé en ce que** l'injecteur supérieur (411) et les moyens pour entraîner l'eau (422) sont configurés pour injecter le premier écoulement (Q1) d'eau et pour entraîner l'eau produisant la première vitesse de rotation (w1) et la deuxième vitesse de rotation (w2) avec la même direction naturelle que la force de Coriolis.

13. Procédé non invasif de nettoyage automatique de un bassin d'élevage (200) aquacole, en utilisant un système non invasif de nettoyage automatique selon l'une quelconque des revendications 1 et 9, **caractérisé en ce qu'**il comporte les étapes consistant à :
injecter un premier écoulement (Q1) d'eau dans une section supérieure (201) du bassin (200) ;
injecter un deuxième écoulement (Q2) d'eau dans une section inférieure (202) du bassin (200) ;
générer une première vitesse de rotation (w1) dans une première masse d'eau d'une section supérieure (201) du bassin d'élevage (200) ;
générer une deuxième vitesse de rotation (w2) dans une deuxième masse d'eau à partir d'une section inférieure (202) du bassin d'élevage (200) ;
déplacer des résidus solides de la section supérieure (201) vers la section inférieure (202) par le biais d'une différence de pression ; et
extraire un écoulement d'eau à partir du bassin d'élevage (200) à travers un drain (203) ;
dans lequel la deuxième vitesse de rotation (w2) de la masse d'eau de la section inférieure (202) est supérieure à la première vitesse de rotation (ω1) de la masse d'eau de la section supérieure (201).

14. Procédé selon la revendication 13, **caractérisé en ce que** la deuxième vitesse de rotation (w2) est au moins trois fois supérieure à la première vitesse de rotation (ω1) de la masse d'eau de la section supérieure (S1).

15. Procédé selon la revendication 13, **caractérisé en ce qu'**il comporte également l'étape consistant à remplacer le tamis (303) selon la taille et le stade de développement des espèces cultivées.
